(19) Europäisches Patentamt
European Patent Office
Office européen des brevets

(11) EP 1 252 349 B1

(12) # EUROPÄISCHE PATENTSCHRIFT

(45) Veröffentlichungstag und Bekanntmachung des Hinweises auf die Patenterteilung:
**15.10.2003 Patentblatt 2003/42**

(21) Anmeldenummer: **01907484.8**

(22) Anmeldetag: **01.02.2001**

(51) Int Cl.[7]: **C22C 1/10**, C22C 1/05, B22F 3/26

(86) Internationale Anmeldenummer:
**PCT/EP01/01057**

(87) Internationale Veröffentlichungsnummer:
**WO 01/056758 (09.08.2001 Gazette 2001/32)**

(54) **DRUCKGIESSEN VON REFRAKTÄREN METALL-KERAMIK-VERBUNDWERKSTOFFEN**

DIE CASTING OF REFRACTORY METAL-CERAMIC COMPOSITE MATERIALS

MOULAGE SOUS PRESSION DE MATERIAUX COMPOSITES METAL-CERAMIQUE REFRACTAIRES

(84) Benannte Vertragsstaaten:
**DE**

(30) Priorität: **02.02.2000 DE 10004471**
**25.09.2000 DE 10047384**

(43) Veröffentlichungstag der Anmeldung:
**30.10.2002 Patentblatt 2002/44**

(73) Patentinhaber: **CLAUSSEN, Nils**
**D-21224 Rosengarten (DE)**

(72) Erfinder:
- **CLAUSSEN, Nils**
  **21224 Rosengarten (DE)**
- **SANDHAGE, Kenneth, H.**
  **Columbus, OH 43210 (US)**
- **KUMAR, Pragati**
  **Sunnyvale, CA 94086 (US)**
- **JANSSEN, Rolf**
  **21073 Hamburg (DE)**
- **BEYER, Peter**
  **8460 Marthalen (CH)**
- **WAGNER, Florian**
  **28816 Stuhr (DE)**
- **TRAVITZKY, Nahum**
  **66822 Leebach (DE)**

(74) Vertreter: **Huber, Bernhard, Dipl.-Chem. et al**
**Weickmann & Weickmann**
**Patentanwälte**
**Postfach 86 08 20**
**81635 München (DE)**

(56) Entgegenhaltungen:
**EP-A- 0 184 604**
**EP-A- 0 244 942**
**DE-A- 19 750 599**
**US-A- 3 184 306**
**US-A- 4 689 077**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Verfahren zur Herstellung von hitzebeständigen Verbundwerkstoffen, die eine keramische Phase und eine metallische Phase mit Schmelzpunkten von mindestens 1000 °C umfassen. Des Weiteren betrifft die Erfindung derartige Verbundwerkstoffe sowie deren Anwendungsmöglichkeiten.

Hitzebeständige Metalle werden bereits in einer Vielzahl von Hochtemperaturanwendungen eingesetzt, einschließlich als Bauteile in Gasturbinenmotoren für Flugzeuge oder zur Energieerzeugung (z.B. Turbinenschaufeln, Kanäle, Scheiben, Ringe, Wellen, Rotoren, Düsen, Ummantelungen und Brennkammern); sowie in Atomreaktoren (z. B. Dampfgeneratorrohre, strukturelle Bauteile von Reaktorcores), Öfen zur Wärmebehandlung von Metallen oder Keramiken oder Polymeren, Ölraffinerieöfen, Zementmühlenöfen, Glasherstellungsanlagen, Petrochemieöfen, Anlagen für chemische Prozesse (z.B. Kohlenwasserstoffreformierer und Cracker), Stahlerzeugungsanlagen und Gummiverarbeitungsanlagen. Derartige wärmebeständige Metalle umfassen Legierungen auf der Basis von Nickel, Kobalt, Chrom und Eisen sowie Titan. Diese Metalle stellen eine nützliche Kombination aus chemischer Inertheit, Hochtemperaturfestigkeitund-zähigkeit, sowie Thermoschockbeständigkeit dar. Ein schwerwiegender Nachteil derartiger Metalle als strukturelle Komponenten ist jedoch bei hohen Temperaturen der Beginn einer merklichen Kriechdehnung. Dieser Kriechneigung hat man versucht entgegenzuwirken, indem man die Metalle mit Verstärkungselementen, insbesondere aus Keramik, ausstattete. Das Vorhandensein einer keramischen Phase kann dem Verbundwerkstoff verbesserte Eigenschaften verleihen, wie etwa bessere mechanische, thermische und/oder chemische Eigenschaften. Die keramische Phase solcher Verbundwerkstoffe besteht bei den im Stand der Technik bekannten Keramik-Metallen aus Oxiden, Carbiden oder Nitriden, insbesondere Aluminiumoxid ($Al_2O_3$). In der Regel wird ein solcher Verbundwerkstoff pulvermetallurgisch durch Mischen keramischer und metallischer Pulver und anschließendes Pressen und Sintern hergestellt, was aufwendig und teuer ist. Er kann aber auch durch Druckinfiltrieren eines keramischen Vorkörpers mit Aluminium hergestellt werden, wobei das Aluminium zusammen mit anderen im Vorkörper vorhandenen oder gleichfalls eingepressten Metallen Aluminide bildet. Ein so hergestellter Verbundkörper weist aufgrund seiner keramischen Phase zwar gute Eigenschaften bezüglich der Wärmebeständigkeit auf, ein großer Nachteil besteht jedoch darin, dass die Aluminide zu einer erhöhten Sprödigkeit des Materials führen.

Der vorliegenden Erfindung lag die Aufgabe zugrunde, einen duktilen, wenig spröden Metall-Keramik-Verbundwerkstoff herzustellen, welcher hochschmelzende Metalllegierungen umfasst und welcher auf einfache Art und Weise und bei relativ niedrigen Temperaturen herzustellen ist.

Diese Aufgabe wird erfindungsgemäß gelöst durch ein Verfahren zur Herstellung eines Verbundwerkstoffs, umfassend eine keramische Phase und eine metallische Phase, deren Schmelzpunkte mindestens 1100 °C betragen, welches dadurch gekennzeichnet ist, dass man einen mindestens eine reaktive keramische Komponente und mindestens ein bei 1000 °C oder darüber schmelzendes Metall umfassenden porösen Vorkörper mit Al oder einer Al-Legierung, welche mit mindestens einem Teil der keramischen Komponenten reagieren kann, druckinfiltriert, indem man das infiltrierende Al oder die Al-Legierung entweder

1) in mindestens teilweise geschmolzener Form bei einer Temperatur von 750 °C oder darunter dem Vorkörper von außen zuführt oder
2) dass man einen Teil des Al oder der Al-Legierung in fester Form in den Vorkörper einbringt und danach den anderen Teil in geschmolzener Form bei einer Temperatur unter 750 °C von außen zuführt,

wobei die Bedingungen so gewählt werden, dass das infiltrierende Al oder die Al-Legierung und die reaktiven keramischen Komponenten einer Verdrängungsreaktion unterliegen; und wobei die stöchiometrischen Mengen an freien Metallen und keramischen Komponenten so gewählt werden, dass weniger als 20 % des gebildeten Verbundwerkstoffs aus Aluminiden besteht und wobei die werkstofflichen Bedingungen so gewählt werden, dass das Volumen der während der Reaktion gebildeten keramischen Komponenten kleiner ist als das Volumen der in der Reaktion verbrauchten keramischen Komponenten.

Das erfindungsgemäße Verfahren (r-3C-Verfahren, von reactive casting of ceramic composites) beruht somit auf einer Reaktion zwischen den reaktiven keramischen Komponenten und mindestem einem Teil der freien Metalle des Vorkörpers und dem eingepressten Metall (d.h. Al oder/und Al-Legierung), welches bei relativ niedrigen Temperaturen von 750 °C oder darunter schmilzt, bzw. erweicht, wobei die Metalle der reaktiven keramischen Ausgangskomponenten durch das eingepresste Al oder Al-Legierung zumindest partiell ersetzt werden und anschließend zusammen mit einem Teil der freien Metalle des Vorkörpers eine hochschmelzende Legierung bilden können. Das eingepresste Metall kann auch Anteile der freien Metalle enthalten, solang diese Legierungszusätze die Einpressfähigkeit bei 750 °C nicht beeinträchtigen. Ein zusätzlicher Vorteil ist, dass derartige Reaktionen exotherm verlaufen, wobei man sich die dabei freiwerdende Reaktionswärme zunutze machen kann.

Der keramische Vorkörper enthält zweckmäßig mindestens 5 Vol.-% keramische und mindestens 5 Vol.-% freie Metalle. Die keramischen Bestandteile können aus Oxiden, Nitriden, Carbiden, Oxycarbiden, Carbonaten, Oxynitriden, Nitraten, Hydriden, Hydraten, Chloriden, Fluoriden, Jodiden, Boriden, Sulfiden oder Sulfaten oder Gemischen, Verbindungen oder festen Lösung davon bestehen. Die Metallkomponenten dieser Oxide, Nitride etc. werden bevorzugt aus einem oder mehreren der folgenden Metalle ausgewählt: Al, Mg, Cr, Co, Ce, Cu, Hf, Fe, La, Mn, Mo, Ni, Nb, Pd, Si, Ag, Ta, Ti, V, W, Y und Zr. Besonders bevorzugt werden als reaktive keramische Komponente $Fe_2O_3$, $Cr_2O_3$, NiO, $TiO_2$, $Fe_xN_y$, $CrN_2$ oder Gemische davon eingesetzt. Der Volumenanteil der keramischen Komponente wird u.a. so ausgewählt, dass die bei der Reaktion freiwerdende Wärme die Bildung der hochschmelzenden Legierungen unterstützt. Allerdings muss bei der quantitativen und qualitativen Auswahl der Reaktionspartner und -bedingungen darauf geachtet werden, dass keine übermäßige Erhitzung auftritt.

Zusätzlich zu den reaktiven keramischen Bestandteilen, die in der Lage sind, mit dem eingepressten flüssigen Metall zu reagieren, kann der Vorkörper auch inerte Bestandteile umfassen z.B. inerte keramische Bestandteile, wobei inert so zu verstehen ist, dass das inerte Material unter den gegebenen Bedingungen mit dem eingepressten Metall nicht oder nur wenig reagiert.

Des Weiteren enthält der keramische Vorkörper zusätzlich freies Metall, welches zweckmäßig in Form von Metallpulver oder Metallpartikeln, -fasern u.dgl. vorliegt. In Betracht kommen ein oder mehrere Metalle aus der Gruppe Al, Mg, Cr, Co, Ce, Cu, Au, Hf, Fe, Al, Mn, Mo, Ni, Nb, Pd, Pt, Si, Ag, Ta, Ti, V, W, Y und Zr. Diese Metalle können auch Legierungen umfassen. Besonders bevorzugt sind Eisen-, Nickel-, Chrom-, Kobalt- und Titanlegierungen. Diese im Vorkörper vorhandenen freien Metalle sind mindestens teilweise an der Bildung der hochschmelzenden metallischen Phase des fertigen Verbundwerkstoffs beteiligt.

Der Vorkörper wird auf herkömmliche Art und Weise hergestellt, beispielsweise indem Keramik- und Metallpulver bzw. -partikel gepresst und geformt werden. Beispiele für Verfahren zur Herstellung solcher Grünkörper umfassen uniaxiales Pressen, isostatisches Pressen, Extrusion, Spritzgießen, Schlickergießen, maschinelles Bearbeiten oder/und Kombinationen der genannten Verfahren.

Der Vorkörper ist porös, um das Eindringen des infiltrierenden Metalls zu erlauben. Die Porosität wird bei der Herstellung des Vorkörpers durch Art der Materialien und durch den zum Formen angewendeten Druck eingestellt und sollte einen Mindestgrad nicht unterschreiten, damit soviel infiltrierendes Metall in den Vorkörper eindringen kann, dass die gewünschte Reaktion und Legierungsbildung stattfinden kann, d.h. damit die zuvor festgelegten keramischen und metallischen Endprodukte entstehen.

Infolge der duktilen Metallpulveranteile hat der Vorkörper oft eine ausreichende Grünfestigkeit. Er kann aber auch zusätzliche Verfestigungsmittel, wie etwa anorganische Bindemittel, Zement, Wasserglas und/oder feste Salze, enthalten. Zusätzlich können Verstärkungselemente, beispielsweise aus einem möglichst nicht reagierenden Metall, im Vorkörper vorhanden sein. Die Verstärkungselemente können in Form eines kontinuierlichen Netzwerks oder als diskontinuierliche Fasern, Plättchen oder Partikel o.dgl. vorliegen. Vor dem Druckinfiltrationsschritt kann der poröse Vorkörper je nach Bedarf vorbehandelt werden. Es ist möglich, den Vorkörper einer Reaktionsbehandlung und/oder einer Wärmevorbehandlung zu unterziehen, um zumindest teilweises Sintern zu ermöglichen.

Das einzupressende Metall kann für die Zwecke der vorliegenden Erfindung ein Metall oder ein Meta lgemisch oder eine Metalllegierung auf Al-Basis sein. Wesentlich ist, dass das einzupressende Metall, Gemisch oder Legierung bei Temperaturen von 750 °C oder darunter erweicht und zur Druckinfiltration verwendet werden kann. Bevorzugt enthält das infiltrierende Metall außer Al auch mindestens ein weiteres Metall ausgewählt aus der Gruppe, bestehend aus Mg, Si, Ca, Sr, Ba, Li, Na, K, Rb, Cs, Cu, Ag, Zn, Sn, In, Pb und Bi und Gemischen oder Legierungen davon. Zusätzlich zu einem oder mehreren der genannten bevorzugten Metallen können weitere Metalle, ausgewählt aus Cr, Co, Cu, Hf, Fe, Mn, Mo, Ni, Nb, Ta, Ti, W, F, Y und Zr, in dem infiltrierenden Metall enthalten sein, wobei jedoch die Anteile dieser zusätzlichen Metalle so gering sein müssen, dass der Schmelz- oder Erweichungspunkt des Gemisches oder der Legierung nicht über 750 °C liegt.

Der Druckinfiltrationsschritt des erfindungsgemäßen Verfahrens wird bevorzugt durch Pressguss, Druckguss, Gasdruckinfiltration oder Kombinationen davon durchgeführt. Wie bereits erwähnt, findet die Infiltration bei höchstens 750 °C statt, bevorzugt sind noch niedrigere Temperaturen, insbesondere 660 °C oder darunter, bevorzugt 600 °C oder darunter.

Auch kann das infiltrierende Metall ganz oder teilweise schon dem Vorkörper in fester Form zugesetzt werden, wobei die Druchinfiltration dann in situ bei 1000 °C oder darunter erfolgt.

Bei der in situ Ausführungsform des erfindungsgemäßen Verfahrens bringt man das metallkeramische Pulvergemisch in eine Matrize ein und presst unter Anwendung eines Druckes von 1 bis 100 MPa bei einer mindestens zum Schmelzen der Metallpulverteilchen ausreichenden Reaktionstemperatur bis sich durch die in situ Infiltration und Reaktion ein partiell oder vollständig dichter metallkeramischer Verbundwerkstoff entsteht, der aus einer überwiegend aus Metalllegierung bestehenden Matrix aufgebaut ist. Bei dieser Ausführungsform wird das Al- oder Al-Legierungspulver in einem Teilchengrößenbereich eingesetzt, der unter den angewendeten Druck- und Temperaturbedingungen in pulvriger oder vorgepresstem Zustand keine Reaktion mit den anderen Komponenten des Pulvergemisches bewirkt. Vorzugsweise besteht das Al- oder Al-Legierungspulver aus überwiegend kugeligen Teilchen mit einem Größenbereich zwischen 5 und 500 µm. Hierbei wird der Druck zweckmäßig durch mechanisches Pressen erzeugt. Die Reaktionstemperatur wird zweckmäßig für einen Zeitraum zwischen weniger als 1 Sekunde und 15 Minuten angewendet.

Nach der Druckinfiltration des porösen Vorkörpers mit dem erweichten Metall und dem vollständigen Ablauf der exothermen Reaktion zwischen reaktiver Keramikkomponente und Infiltrationsmetall kann zusätzlich eine Wärmenachbehandlung erfolgen, um beispielsweise weitere Interdiffusion, Legierungsbildung und/oder eine oder mehrere weitere Reaktion ablaufen zu lassen, oder um eine mikrostrukturelle Modifizierung zu erlauben.

Das Prinzip der vorliegenden Erfindung beruht auf dem Auswählen von geeigneten Bedingungen, die das Ablaufen der folgenden Reaktion erlauben:

$$(A) + (B) \rightarrow (C) + (D),$$

wobei auf der linken Seite die qualitative und quantitative Zusammensetzung des Vorkörpers (A), die Menge und Art des in die offenen Poren einzupressenden Metalls (B) und auf der rechten Seite (gewünschtes Produkt), die Menge der bei der Reaktion von (A) und (B) neu entstandenen keramischen Komponente (C) sowie Menge und Zusammensetzung der angestrebten Legierung (D) eingesetzt sind. Bevorzugt wird das stöchiometrische Verhältnis zwischen der reaktiven keramischen Komponente des Vorkörpers und des einzupressenden Metalls so gewählt, dass das infiltrierende Metall zum wesentlichen Teil oxidiert wird und dann als neu gebildete keramische Komponente vorliegt. Allerdings sollte immer soviel vom infiltrierten Metall übrig bleiben, wie es für die gewünschte Legierung im Endprodukt erforderlich ist. Aus Aluminium als infiltrierendes Metall und einer oxidischen Keramikkomponente bildet sich $Al_2O_3$ im Fall einer nitridischen Keramikkomponente AlN.

Für den Reaktionsablauf wird davon ausgegangen, dass im Wesentlichen Sauerstoff oder Stickstoff nur in Form von Oxiden oder Nitriden beteiligt ist, welche als reaktive keramische Bestandteile im Vorkörper vorhanden sind. Die Infiltrationsbedingungen werden so gewählt, dass das Gesamtvolumen der während der Reaktion von (A) mit (B) gebildeten keramischen Komponenten kleiner ist als das Volumen der zuvor im Vorkörper vorhandenen reaktiven keramischen Komponenten.

Die Erfindung betrifft weiterhin ein Verbundmaterial, welches durch das oben beschriebene Verfahren erhältlich ist und welches eine keramische Phase und eine metallische Phase, deren Schmelzpunkte mindestens 1100 °C betragen, umfasst. Die metallische Phase im fertigen Verbundstoff kann die folgenden Metalle oder Legierungen umfassen: Al, Mg, Cr, Co, Ce, Cu, Au, Hf, Fe, La, Mn, Mo, Ni, Nb, Pd, Pt, Si, Ag, Ta, Ti, V, W, Y und Zr. Wie bereits erwähnt, soll Aluminium im fertigen Verbundkörper höchstens zu 20 % als Aluminid vorliegen. Aluminium bildet eine feste Lösung oder eine Legierung innerhalb der hochschmelzenden metallischen Phase. Bevorzugt umfasst die metallische Phase im fertigen Verbundstoff mindestens eins der Metalle Ti, Ni, Cr und Fe. Besonders bevorzugt handelt es sich bei dem fertigen Verbundwerkstoff um ein Oxiddispersions-verstärktes Metall, er kann aber auch eine Metallverstärkte Keramik sein.

Der fertige Verbundkörper besitzt eine annähernd gleiche Form wie seine poröse Vorform.

Die Erfindung umfasst ebenfalls die Verwendung eines erfindungsgemäß hergestellten Verbundmaterials als funktionelle Komponente in Motoren, Maschinen und als Teil von größeren geformten Bauteilen.

Im Folgenden wird die Erfindung anhand einer bevorzugten Ausführungsform näher erläutert.

Obwohl mit der Erfindung viele hitzebeständige Legierungszusammensetzungen erhalten werden können, sind hitzebeständige Legierungen mit Metallen aus der Eisen-Chrom-Nickel-Gruppe bevorzugt. Besonders bevorzugt werden die Komponenten nach Art und Menge so ausgewählt, dass sich folgende Reaktionsgleichung ergibt:

$$\underset{(B)}{\{2\ AL\}} + \underset{(A)}{\{0{,}494\ Fe + 0{,}188\ Ni + 0{,}318\ Cr + xO\}} \rightarrow \underset{(C)}{Al_2O_3} + \underset{(D)}{Fe_{0.494}Cr_{0.318}Ni_{0.188}} \quad (1)$$

bei der Aluminiumoxid und eine Legierung mit einer Zusammensetzung aus 0,494 Mol Fe, 0,318 Mol Cr und 0,188 Mol Ni entstehen. In der obigen Reaktionsgleichung ist Sauerstoff als unabhängige Spezies dargestellt, um die allgemeine Geltung der Reaktion deutlich zu machen. Im Verfahren der Erfindung ist Sauerstoff jedoch bevorzugt nur oder hauptsächlich als Oxid von Fe, Ni, Cr, Ti oder einem Gemisch der Oxide von Fe, Ni, Cr und Ti (wie etwa Ferrite oder Chromate) vorhanden. In der Reaktion (1) ist die feste keramische Phase (A) (Oxid von Fe, Ni und/oder Cr) das Oxidationsmittel, das zur Oxidation des im geschmolzenem Metall vorhandenen Aluminiums verwendet wird. Der in der Reaktion Metall-freisetzende Sauerstoff (Oxid) sowie andere metallische Spezies, die in der Vorform vorhanden sein können, bilden dann zusammen die hitzebeständige Legierung.

Die Porosität des Vorkörpers kann so kontrolliert werden, dass bei Infiltration der Poren mit geschmolzenem Al die Menge an Aluminium im Vorkörper der von der Stöchiometrie der Reaktion (1) vorgegebenen Menge entspricht.

Die Zusammensetzung des porösen Vorkörpers kann dabei so eingestellt werden, dass sie (i) eine geeignete Menge an duktilem Metall zur Verbesserung der Grünformbarkeit aufweist, (ii) eine Oxidphase aufweist, welche mit Aluminium eine Reaktion eingeht. Eine solche Reaktion läuft in der Regel exotherm ab, wobei die entstehende Wärme die Kinetik sowohl der Reaktion als auch die Legierungsbildungsreaktion verbessert. Die die reduzierten Spezies Ti, Fe, Ni und/oder Cr (d.h. entweder als reine metallische Phase oder als Metalllegierung) enthaltende metallische Phase kann mit weiteren Metallphasen im Vorkörper entweder während oder nach Vollendung der Reaktion weiter reagieren. Der infiltrierte und reagierte Vorkörper wird dann abgekühlt. In diesem Stadium kann der feste Körper bereits den gewünschten Keramik/Metall-Verbundstoff darstellen. Falls die Reaktion noch nicht vollständig abgelaufen ist, muss eine zusätzliche Wärmebehandlung erfolgen, um eine weitere Interdiffusion zu gestatten, bis sich der gewünschte Keramik/Metall-Verbundkörper bildet.

Beispiele

Zur Veranschaulichung spezieller Fälle der Reaktion 1, bei der Sauerstoff in der Vorform als Oxid vorhanden ist (d.h. lediglich als $Cr_2O_3$, CoO $Fe_2O_3$ oder NiO), sollen folgende Gleichungen dienen:

$$0{,}318\ Al + 0{,}494\ Fe + 0{,}188\ Ni + 0{,}159\ Cr_2O_3 \rightarrow 0{,}159\ Al_2O_3 + Fe_{0{,}494}Cr_{0{,}318}Ni_{0{,}188} \quad (1a)$$

$$0{,}494\ Al + 0{,}247\ Fe_2O_3 + 0{,}188\ Ni + 0{,}318\ Cr \rightarrow 0{,}247\ Al_2O_3 + Fe_{0{,}494}Cr_{0{,}318}Ni_{0{,}188} \quad (1b)$$

$$0{,}125\ Al + 0{,}494\ Fe + 0{,}188\ NiO + 0{,}318\ Cr_2O_3 \rightarrow 0{,}063\ Al_2O_3 + Fe_{0{,}494}Cr_{0{,}318}Ni_{0{,}188} \quad (1c)$$

$$0{,}28\ Al + 0{,}608\ Ni + 0{,}101\ CoO + 0{,}052\ Cr_2O_3 \rightarrow 0{,}085\ Al_2O_3 + Ni_{0{,}608}Co_{0{,}101}Cr_{0{,}103}Al_{0{,}13} \quad (1d)$$

Der Gehalt an duktilem Metall in dem porösen Vorkörper, die erforderliche Dichte zum Erfüllen der Stöchiometrie, die Enthalpie der Reaktion und der Aluminiumoxidgehalt des Produkts für die Reaktionen 1a-c sind in Tabelle 1 dargestellt.

| Gleichung | Oxidspezies in der Vorform | Metallgehalt in der Vorform (Vol.-%) | erforderliche Vorformdichte (% der theoretischen Dichte) | ΔH für die Austauschreaktion (kJ/cm³) | Produktzusammensetzung (Vol.-% Aluminiumoxid) |
|---|---|---|---|---|---|
| 1a | $Cr_2O_3$ | 50,7 | 72,1 | -6,92 | 36,5 |
| 1b | $Fe_2O_3$ | 32,1 | 66,2 | -13,15 | 46,9 |
| 1c | NiO | 73,8 | 84,6 | -6,67 | 18,3 |
| 1d | CoO, $Cr_2O_3$ | 60,0 | 67,66 | -6,34 | 24,2 |

Im Fall der Reaktion (1a) ist ein 72,1 % dichter Vorkörper erforderlich, damit der Volumenanteil des geschmolzenen Aluminiums in dem Vorkörper nach der Infiltration 27,9 % beträgt, was die benötigte Aluminiummenge für die Stöchiometrie darstellt. Der poröse Vorkörper sollte die Zusammensetzung 0,494 Mol Fe, 0,188 Mol Ni und 0,159 Mol $Cr_2O_3$ aufweisen. Diese Zusammensetzung entspricht 50,7 Vol.-% duktilem Metall (Volumen von Fe und Ni). Ein solch hoher Metallgehalt im Vorkörper verbessert dessen Formbarkeit, der über konventionelle Pulvermetallurgie ohne verdichtende Wärmebehandlung hergestellt werden kann. Ebenso kann eine maschinelle Grünbehandlung des Vorkörpers durchgeführt werden, da das Vorhandensein einer metallischen Phase dem Vorkörpern eine ausreichende Festigkeit und Widerstandsfähigkeit verleiht. Die Enthalpiewärme für die Reaktion zwischen Chromoxid und geschmolzenem Aluminium beträgt-6,92 kJ/cm³ für die Reaktion der Gleichung 1(a). Darin ist die Wärme [kJ] auf 1 cm³ Vorkörpervolumen bezogen.

Die Vorkörperzusammensetzungen der in Tabelle 1 dargestellten Reaktionen sind der Einfachheit halber als einfache Oxide dargestellt. Für die Zwecke der Erfindung kann der Vorkörper jedoch jedwede Kombination von Metallen und Oxiden (einschließlich Multikomponentenoxide) umfassen, und eine solche Zusammensetzung kann für die gewünschten Prozessparameter und Produktzusammensetzungen und Eigenschaften optimiert werden. Eine der Gleichung 1 ähnliche Reaktion kann für die Bildung weiterer hitzebeständiger Legierungen, wie etwa Legierungen auf der Basis von Eisen, Nickel und Kobalt erstellt werden.

Im Verfahren der Erfindung ist das Gesamtvolumen der in all diesen Reaktionen, die zwischen dem geschmolzenen Metall und dem porösen Vorkörper stattfinden, gebildeten keramischen Produkte geringer als das Gesamtvolumen der keramischen Reaktanten im Vorkörper. Die Reduktion des keramischen Volumens stellt mehr Raum für das infiltrierende Metall und für die Metallprodukte der Reaktionen bereit. Die Folge davon ist, dass Keramik/Metall-Verbundstoffe mit relativ hohen Volumenfraktionen an Metall hergestellt werden können. Ein weiterer großer Vorteil dieses Verfahrens ist, dass der Produktkörper eine annähernd gleiche Form wie der poröse Vorkörper hat. Die Umwandlung des Vorkörpers ist von der Größe des Konstruktionsteils unabhängig, da die Reaktion lokal auf mikroskopischer Ebene stattfindet. Dies ist eine besonders wichtige Eigenschaft im Vergleich zu bekannten Verfahren, bei denen die Umwandlungsszeit und damit die Prozessdauer mit der Größe des Teils zunimmt. Zusätzlich erhöht die durch die exotherme Reaktion gebildete Wärme die Umwandlungskinetik. Daher können die Verbundwerkstoffe bei niedrigen Prozesstemperaturen und für geringe Herstellungskosten erhalten werden.

Wie zuvor erörtert, können die metallhaltigen porösen Vorkörper durch herkömmliche pulvermetallurgische Techniken hergestellt werden. Anteil und Größe der Poren kann durch den Pressdruck, sowie durch anschließende Wärmebehandlung eingestellt werden. Eine solche verdichtende Wärmebehandlung muss jedoch für bestimmte Zusammensetzungen, die entsprechende Mengen duktiler Metalle enthalten, nicht unbedingt erforderlich sein. Bei Vorkörper, die einen beträchtlichen Gehalt an duktilem Metall aufweisen, kann ein solches Pulvergemisch, wenn es in einer Kugelmühle gemahlen wird, zu einer Lamellenmorphologie der metallischen Phasen führen, einer typischen mechanischen Legierungsmikrostruktur, die für die Verstärkung des Vorkörpers bevorzugt ist. Diese metallischen Phasen können auch während der Lösungsreaktion ihre lamellare Phasenmorphologie beibehalten. Solche Mikrostrukturerhaltung der metallischen Phasen stellt eine bevorzugte Ausführungsform der vorliegenden Erfindung dar. Eine solche Replikation der Mikrostruktur erlaubt die Kontrolle über die Produktmikrostruktur, indem die Morphologie der Phasen im Vorkörper kontrolliert wird. Die mechanischen Eigenschaften der Verbundwerkstoffe können so je nach ihrer beabsichtigten spezifischen Anwendung gezielt eingestellt werden.

Beispiel 1

Das folgende Beispiel, in dem die Gleichungen (1a) und (1d) experimentell nachvollzogen werden, erläutern die Erfindung weiter.

Vorkörper für Verfahren auf der Grundlage der Reaktionsgleichungen (1a) - (1d), die Metalle und Oxide aus dem System Fe-Ni-Cr-O (Ia bis 1c) und Ni-Co-O (1a) umfassen, wurden nach Standardmethoden der Pulvermetallurgie hergestellt. Die genaue Zusammensetzung ist in den genannten Gleichungen dargestellt. Da die Prozessschritte optimiert werden müssen, werden die Vorkörper aus unterschiedlich großen Ausgangspartikeln hergestellt. Das Metallund Oxidpulver wird in den geeigneten Verhältnissen gemäß der Stöchiometrie einer bestimmten Reaktion gemischt. Dieses Gemisch wird dann in einem Attritor mit Zirkoniumoxid- oder Aluminiumoxid-Kugeln als Mahlmedium in einem Aluminiumoxid-.Mahlgefäß 1 bis 2 Stunden gemahlen. Das Attritormahlen wird in Aceton durchgeführt, um zu verhindern, dass die metallischen Oberflächen Luft ausgesetzt werden, und auch um ein Aufheizen des Systems zu vermeiden. Die Mischung wird über Nacht getrocknet und durch ein 200 μm Sieb passiert. Das so gemahlene Pulvergemisch wird in Ethanol dispergiert und durch Ultraschallbehandlung deagglomeriert. Die Partikelgröße des so gemahlenen Pulvers wird dann mit Hilfe von Lichtdiffraktion in einem Reverse-Fourier-Optik-Gerät (Mastersizer S. Malvern Instruments, Worcestershire, UK) analysiert. Die Partikelgrößenanalysen werden alle 30 Minuten kumulativen Mahlens durchgeführt. Dieses gemischte und gemahlene Pulver wird uniaxial und/oder isostatisch bei 200 bis 400 MPa kaltgepresst, so dass Vorkörperscheiben mit den gewünschten Dichten entstehen. Falls die gepressten Scheiben niedrigere Dichten haben als für die Stöchiometrie notwendig ist, können sie unter Argon zur weiteren Verdichtung gesintert werden. Um die Menge und Verteilung der Porosität innerhalb der gepressten und/oder porössn Vorkörper zu bestimmen, wird Quecksilberporosimetrie angewandt.

Vor der Infiltration und Reaktion wird Aluminium durch Erhitzen auf eine Temperatur von 700 °C an Luft geschmolzen. Die Vorkörper werden in Stahlinlays angeordnet und 10 bis 20 Minuten bei 600 °C vorgeheizt. Die vorgeheizten Vorkörper werden dann zusammen mit den Inlays in eine auf 300 °C erwärmte Matrize eingebracht. Das geschmolzene Metall wird daraufgegossen und mit dem oberen Kolben in den porösen Vorkörper gepresst. Der infiltrierte Körper wird dann aus dem Aluminiumgusskörper herausgetrennt. Falls die Verdrängungs- und/oder Lösungsreaktion während des Infiltrationsprozesses nicht vollständig abgelaufen ist, können die infiltrierten Körper bei Temperaturen oberhalb 800 °C nachbehandelt werden, damit sich das gewünschte Gefüge bilden kann.

Die Phasenanalyse der Proben wird in verschiedenen Prozessstadien mit Röntgendiffraktion durchgeführt. Die Proben werden in einem Phillips (PW1710) Diffraktometer (XRD) in 0,02 Grad-Schritten 1 bis 4 Sekunden über einen weiten Bereich von 2 Theta gescannt, wie es für eine umfassende Analyse erforderlich ist. Die mikrostrukturelle

und mikrochemische Information wird durch Lichtmikroskopie und Rasterelektronenmikroskopie (SEM), sowie energiedispersive Spektroskopie (EDS) erhalten. Die infiltrierten und reagierten Proben werden geschnitten und mit Hilfe von metallographischen Standardverfahren auf 1 µm Diamantschliff poliert. Die SEM- und EDS-Analysen werden in einem mit einem EDS-Detektor ausgestatteten Feldemissionselektronenmikroskop (LEO Gemini) durchgeführt. Die thermische Charakterisierung umfasst die Bestimmung der Reaktionstemperatur und des Liquidus der Proben. Derartige Analysen werden in einem DTA/TGA-Gerät (Netzsch Gerätebau GmbH, Deutschland) durchgeführt, indem die Proben bei einer Rate von 5 bis 10 °C/min auf 1500 °C erwärmt werden.

Die Biegefestigkeit der Komposits wird in einem Vierpunktbiegetest gemäß ASTM Standard C 1161 (Konfiguration A) gemessen. Die Proben werden auf eine Größe von 1,5 mm x 2 mm x 25 mm geschliffen. Diese Rechteckproben werden dann auf 1 µm diamantpoliert, um eine feine Oberflächenbeschaffenheit zu erhalten. Die Kante jeder Testprobe wird mit einem Winkel von 45° gefast. Die Bruchzähigkeit wurde nach ASTM C1161 Standard genommen.

Die theoretischen Reaktionen (1a) und (1d) wurden wie folgt experimentell durchgeführt:
100 g Pulver wurde zusammen mit Plastikbällchen (10 mm Durchmesser) in einem Trommelmixer trocken in Plastikbehältern 10 Stunden gemischt. Die Zusammensetzung gemäß Reaktion (1a) bestand aus 38,48 g $Cr_2O_3$ (Alfa, -325 Mesh, 99 %), 43,94 g Fe (BASF, Carbonylpulver CS, 4 bis 5 µm, 99,5 %) und 17,58 g Ni-Pulver (Aldrich, 3 µm, 99,7 %). Die Zusammensetzung gemäß Reaktion (1d) bestand aus 15,32 g $Cr_2O_3$, 69,87 g Ni und 14,81 g CoO (Alfa, 10 µm, 95 %). Die gemischten Pulver wurden durch ein 200 µm Sieb passiert. Scheibenförmige Vorkörper wurden durch uniaxiales Pressen bei 25 MPa hergestellt. Der Durchmesser betrug 23 bis 24 mm und die Dicke 6 bis 7 mm. Die Vorkörper wogen 10 bis 12 g.

Die Vorkörper wurden dann in einem Induktionsofen bei 1300 °C 1 Stunde unter Vakuum gesintert (Aufheizgeschwindigkeit 7 °C/min). Anschließend wurde der Ofen abgeschaltet. Im Fall von Gleichung (1a) betrug die Dichte des gesinterten Vorkörpers 4,09 g/$cm^3$ entsprechend 61 % TD, und die Dichte des gesinterten Vorkörpers von Gleichung (1d) betrug 3,92 g/$10^3$ (51 % TD). Die theoretischen Prozentangaben der Dichten basierten auf der Annahme, dass während des Sinterungsvorgangs keine Reaktion stattfand. Dies ist nicht ganz korrekt, da sich in Reaktion (1a) Fe-Chromat bildete und in Reaktion (1d) NiO im XRD-Diagramm nachgewiesen wurde und kein CoO mehr zu dedektieren war. Dies deutet daraufhin, dass eine Reaktion zwischen Ni und CoO stattfand. Die Co-Peaks überlappen mit Ni und bilden ein isomorphes System. Die gesinterten Proben von Reaktion 1a enthielten $Cr_2O_3$, Fe-Chromat, Fe und Ni. Die gesinterten Proben von Reaktion 1d enthielten $Cr_2O_3$, NiO, Ni und Co (möglicherweise legiert mit Ni).

Die porösen Vorkörper wurden durch Pressguss mit einer Si-enthaltenden Al-Legierung (Nr. 231) bei weniger als 700 °C infiltriert. Vor dem Pressgiessen wurde die Al-Legierung durch Erwärmen an Luft bei 700 °C aufgeschmolzen. Die Vorkörper wurden in Stahlinlays gelegt und an Luft 10 Minuten bei 600 °C vorgeheizt. Die vorgewärmten Vorkörper wurden zusammen mit den Inlays in die Pressgussform gelegt, die auf 300 °C erwärmt war. Anschließend wurde das geschmolzene Al in die Form gegossen und mit dem oberen Kolben mit einem Druck von 39 MPa in den porösen Vorkörper innerhalb von weniger als 1 Sekunde eingepresst.

Die so infiltrierten Proben wurden weiterhin in einem Rohrofen unter Ar wärmebehandelt, indem sie mit einer Geschwindigkeit von 5 °C/min auf 1000 °C erwärmt und bei dieser Temperatur 10 Stunden gehalten wurden. Nach dieser Behandlung wurde der Ofen durch Abschaltung auf Raumtemperatur abgekühlt. Die Phasen wurden in verschiedenen Prozessstadien durch XRD in einem Bereich von 20 bis 80 Grad analysiert.

Die Durchschnittszusammensetzung der Legierung in der reagierten Probe von Reaktion (1a) bestand aus 44,68 Atom-% Fe, 11,11 At-% Ni, 7,99 At-% Cr und 29,22 At-% Al. Das XRD-Diagramm der infiltrierten und reagierten Probe von Reaktion (1a) ist in Bild 1 dargestellt. SEM (BSE)-Aufnahme der infiltrierten und reagierten Proben sind in Bild 2a und Bild 2b dargestellt.

Die Durchschnittszusammensetzung der Legierung der reagierten Probe von Reaktion 1d bestand aus 76,92 At-% Ni, 8,16 At-% Co, 4,43 At-% Cr und 10,5 At-% Al. Das Legierungselement Si konnte in den reagierten Proben nicht mehr nachgewiesen werden. Das XRD-Diagramm der infiltrierten und reagierten Probe von Reaktion (1d) ist in Bild 3 dargestellt. SEM (BSE) Aufnahmen der infiltrierten und reagierten Proben sind jeweils in Bild 4a und 4b dargestellt.

Um das verbliebene flüssige Al (endothermer Peak) oder unreagierte Komponenten (exotherme Peaks) zu identifizieren wurden DTA/TGA Analysen durchgeführt, dabei wurden die Proben mit 10 °C/min auf 1000 °C erhitzt. Es wurden jedoch weder endotherme noch exotherme Peaks detektiert, was darauf hinweist, dass die Schmelztemperatur der reagierten Proben mindestens 1000 °C betrug (obwohl der Guss bei weniger als 700 °C stattfand).

Es wurde versucht, die Bruchzähigkeit der Verbundwerkstoffe durch die Eindruck-Risslängenmethode zu messen. Es wurden jedoch für Belastungen von 200 N keine Risse beobachtet, die von den Eindruckecken ausgingen.

<u>Beispiele 2 bis 5</u>

In den folgenden Beispielen werden bekannte kommerzielle Legierungen, die bisher bei Temperaturen > 1000 °C gegossen werden mussten, durch das hier beschriebene Verfahren (r-3C-Verfahren) zusammen mit $Al_2O_3$-Disper-

sionen in unterschiedlichen Volumenanteilen durch Druckgießen von reinem Al in poröse Vorkörper bei Temperaturen < 750 °C hergestellt. Alle Legierungen enthalten außerdem Al als Legierungsbestandteil. Es finden als Reaktionen also sowohl eine Reduktion, eine $Al_2O_3$-Bildung, als auch eine Legierungsbildung (Lösung von Al) statt.

Die porösen Vorkörper werden pulvermetallurgisch erzeugt, d.h. Oxidund Metallpulver werden gemischt, geformt und gegebenenfalls durch Sintern, meist in inerter Atmosphäre, auf die erforderliche Dichte (entsprechend einer erforderlichen offenen Porosität) und Festigkeit eingestellt. Statt reinem Al könnten auch Al-Legierungen flüssig eingepresst werden, die Metalle enthalten, die in der Legierung des Endprodukts gewünscht sind. Für die Zwecke der vorliegenden Erfindung liegt der Liquidus unter 750 °C.

Alle Reaktionsgleichungen enthalten auf der linken Seite die Zusammensetzung und Menge des Vorkörpers (A) und die Menge des in die offenen Poren einzupressenden Al (B) und auf der rechten Seite (gewünschtes Produkt) die Menge des entstandenen $Al_2O_3$ (C) sowie Menge und Zusammensetzung der angestrebten Legierung (D) entsprechend:

$$(A) + (B) \rightarrow (C) + (D)$$

Beispiel 2

Aluminium-Bronze + $Al_2O_3$

Aluminium-Bronzen sind Cu-reiche, Al-enthaltene Legierungen, die in geschmierten tribologischen Systemen eingesetzt werden (z.B. säurefeste Pumpen, Lager, Bushings, Getriebe, Ventilsitze, Führungen, Kolben, Nocken, Ziehwerkzeuge, Biegevorrichtungen, etc). Die Härte dieser Legierungen liegt zwischen 30 und 40 HRC. Eine Al-Bronze mit $Al_2O_3$ ist härter und gleichzeitig leichter. Körper daraus können endkonturnah nach dem r-3C-Verfahren hergestellt werden. Der kommerzielle Al-Bronze-Typ 95200 besteht (in Gewichts-%) aus 88 Cu, 9 Al und 3 Fe (oder in at.-%: 78,2 Cu, 18,8 Al, 3,0 Fe). Diese Legierung wurde bisher bei T > 1000 °C gegossen und bei T = 650-745 °C angelassen, wobei ein fcc Alpha-Festkristall entsteht.

i)

Für ein $Al_2O_3$- Anteil von 19.6 Vol.-% in der Legierung kann folgende Gleichung für den r-3C-Prozess verwendet werde (siehe Schemagleichung):

$$(9{,}23\ Cu + 2{,}274\ CuO + 0{,}225\ CuFe_2O_4) + 4{,}936\ Al\ (liqu.) \rightarrow 1{,}058$$

$$Al_2O_3 + 15\ (0{,}782\ Cu + 0{,}188\ Al + 0{,}030\ Fe)$$

Der Vorkörper (A) besteht dabei aus (in Vol.-%): 57,9 Cu, 24,5 CuO, 17,6 $CuFe_2O_4$. (CuO und $CuFe_2O_4$ sind unterhalb von 1000 °C an Luft chemisch kompatibel). Um der Stöchiometrie der Reaktionsgleichung gerecht zu werden, d.h. um weder einen Überschuss noch einen Mangel an reaktiven Al im Vorkörper zu haben, besitzt der Vorkörper eine offene Porosität von 33,1 % (entsprechend einer Dichte von 66,9 % der theoretischen Dichte). (Die Dichte von Al bei 700 °C ist 2,37 $g/cm^3$, die der Legierung 7,64 $g/cm^3$).

ii)

Für einen $Al_2O_3$-Anteil von nur 9,48 Vol.-% in der Legierung gilt folgende Gleichung:

$$25{,}8\ Cu + 1{,}074\ CuO + 0{,}525\ CuFe_2O_4) + 8{,}696\ Al\ (l) \rightarrow 1{,}058\ Al_2O_3$$

$$+$$

$$35\ (0{,}782\ Cu + 0{,}188\ Al + 0{,}030\ Fe)$$

Der Vorkörper besteht aus (in Vol.-% ): 75,4 Cu , 5,4 CuO, 19,2 $CuFe_2O_4$. Eine offene Porosität von 28,9 % (entspricht einer Dichte von 71.1 % TD) ist für die stöchiometrische Reaktion erforderlich.

Beispiel 3

Co-Basislegierung (Typ AR-215) + 34,7 Vol.-% $Al_2O_3$

AR-215 ist eine hochtemperaturfeste Co-Legierung bestehend aus (in Gew.-%):

64 Co, 19 Cr, 4,3 Al, 7,5 Ta, 4,5 W, 0,35 C, 0,13 Zr, und 0,17 Y. Wenn nur die Hauptbestandteile berücksichtigt werden, besteht sie aus (in at.-%) 64,8 Co, 21,8 Cr, 9,4 Al, 2,5 Ta, 1,5 W. Diese kommerzielle Legierung besitzt eine fcc (austenitische) Festkristall-Matrix. Eine Verstärkung mit $Al_2O_3$ würde die Hochtemperatur-Kriechbeständigkeit verbessern. Entsprechend dem Verfahrensschema von Beispiel 2a kann folgende Gleichung für die r-3C-Reaktion verwendet werden:

$$(2{,}156\ Co + 0{,}436\ CoCr_2O_4 + 0{,}10\ Ta + 0{,}06\ W) + 1{,}538\ Al\ (l) \rightarrow$$

$$0{,}581\ Al_2O_3 + 4\ (0{,}648\ Co + 0{,}218\ Cr + 0{,}094\ Al + 0{,}025\ Ta +$$

$$0{,}015\ W)$$

Der Vorkörper besteht aus (in Vo).-%) : 41,0 Co, 54,3 $CoCr_2O_4$, 3,1 Ta, 1,6 W. Für eine Reaktions-Stöchiometrie bei 700 °C müsste der Vorkörper eine offene Porosität von 33,3 % (entspricht einer Dichte von 66,7 % TD) besitzen. Die Matrix enthält 9,4 at.-% = 43 Gew.-% Al in fester Lösung.

Beispiel 4

Nimonic 105 + 30,05 Vol.-% $Al_2O_3$

Nimonic 105 ist eine kommerzielle hochtemperaturfeste Ni-Basis-Superlegierung, deren Kriechwiderstand ebenfalls durch Einlagerung von $Al_2O_3$ verbessert werden könnte. Entsprechend Beispiel 2a kann folgende Reaktionsgleichung herangezogen werden:

$$(0{,}1\ CoO + 0{,}08\ Cr_2O_3 + 0{,}089\ Co + 0{,}029\ Mo + 0{,}511\ Ni + 0{,}014$$

$$Ti\ ) + 0{,}324\ Al\ (l) \rightarrow 0{,}113\ Al_2O_3 + (0{,}511\ Ni + 0{,}189\ Co + 0{,}16\ Cr$$

$$+ 0{,}029\ Mo + 0{,}014\ Ti + 0{,}097\ Al)$$

Der Volumenanteil der Oxide (CoO, $Cr_2O_3$) beträgt 44,3 %. Der Vorkörper muss eine offene Porosität von 31,94 % (entspricht einer Dichte von 68,06 % TD) besitzen, um die Stöchiometrie der Gleichung zu erfüllen.

Beispiel 5

Rene 100 + 26,6 Vol.-% $Al_2O_3$

Rene 100 ist ebenfalls eine kommerzielle Ni-reiche Hochtemperaturlegierung, die mit $Al_2O_3$ verstärkt werden kann. Wie in Beispiel 2a lässt sich folgende Gleichung für die Herstellung des $Al_2O_3$-haltigen Verbundwerkstoffs verwenden:

$$(0{,}144\ CoO + 0{,}052\ Cr_2O_3 + 0{,}018\ Mo + 0{,}578\ Ni + 0{,}050\ Ti) + 0{,}314$$

$$Al\ (l) \rightarrow 0{,}995\ Al_2O_3 + (0{,}578\ Ni + 0{,}144\ Co + 0{,}103\ Cr + 0{,}018\ Mo +$$

$$0{,}05\ Ti + 0{,}115\ Al$$

Der Vorkörper enthält 41,3 Vol.-% Oxide (CoO, $Cr_2O_3$). Er muss eine offene Porosität von 21,78 % (entspricht einer Dichte von 68,22 % TD) besitzen.

Beispiel 6

100 g einer Pulvermischung aus der stöchiometrischen Zusammensetzung, die folgender Reaktionsgleichung entsprach:

$$0{,}2\ Al + 0{,}294\ Fe + 0{,}1\ Fe_2O_3 + 0{,}318\ Cr + 0{,}188\ Ni \rightarrow 0{,}1\ Al_2O_3 + Fe_{0,494}Cr_{0,318}Ni_{0,188},$$

wurde 1 Stunde in einem Attritor mit 3 mm $ZrO_2$-Kugel in Aceton gemischt und anschließend an Luft getrocknet und durch ein 200 µm Sieb passiert. Das Aluminiumpulver wurde in Form des Handelsproduktes Alcan 105 mit einer Teilchengröße zwischen 25 µm eingesetzt und durch das kurze Attritieren praktisch nicht verändert. Aus der Pulvermischung wurden runde Zylinder mit einem Durchmesser von 15 mm und einer Höhe von 10 mm in einer Stahlmatrize mit 10 MPa uniaxial und anschließend isostatisch bei 400 MPa kaltgepresst. Diese Presslinge wurden in einer Stahlmatrize mit einem Durchmesser von 15 mm eingelegt. Die Seitenwände der Matrize wurden im Bereich der Probe mit submikronfeinem BN-Pulver beschichtet, um nach der in situ Reaktinsinfiltration ein Anhaften zu vermeiden. Die so gefüllte Matrize wurde in einen auf 900 °C vorgeheizten Ofen gestellt und mit 20 MPa belastet. 5 Minuten nach Erreichen der Reaktionstemperatur wurde die Matrize entfernt und innerhalb von 10 Minuten auf Raumtemperatur abgekühlt. Die XRD- und SEM-Untersuchungen der mittig aufgetrennten Probe ergeben ein vollständig durchreagiertes und dichtes Gefüge grundsätzlich aus $Al_2O_3$ und $Fe_{0,494}$ $Cr_{0,318}$ $Ni_{0,188}$ Legierung. Die Vickers-Härte (100 N) betrug ~ 4 GPa. Die Dreipunktbiegefestigkeit betrug ~ 1100 MPa. Die Bruchzähigkeit (nach ISB) betrug ~ 18 MPa $\sqrt{m}$. Der Volumenanteil des in der FeCrNi-Matrix dispergierten $Al_2O_3$ betrug 26 %.

Diese Beispiele zeigen, dass das erfindungsgemäße r-3C-Verfahren sehr flexibel hinsichtlich der gewünschten Zusammensetzung der Verbundwerkstoffe ist.

**Patentansprüche**

1. Verfahren zur Herstellung eines Verbundwerkstoffs, umfassend eine keramische Phase und eine metallische Phase, deren Schmelzpunkte mindestens 1100 °C betragen,
**dadurch gekennzeichnet,**
**dass** man einen mindestens eine reaktive keramische Komponente und mindestens ein bei 1000 °C oder darüber schmelzendes Metall umfassenden porösen Vorkörper mit Al oder einer Al-Legierung, welche mit mindestens einem Teil der keramischen Komponenten reagieren kann, druckinfiltriert, indem man das infiltrierende Al oder die Al-Legierung entweder

   1) in mindestens teilweise geschmolzener Form bei einer Temperatur von 750 °C oder darunter dem Vorkörper von außen zuführt oder
   2) **dass** man einen Teil des Al oder der Al-Legierung in fester Form in den Vorkörper einbringt und danach den anderen Teil in geschmolzener Form bei einer Temperatur unter 750 °C von außen zuführt,

   wobei die Bedingungen so gewählt werden, dass das infiltrierende Al oder die Al-Legierung und die reaktiven keramischen Komponenten einer Verdrängungsreaktion unterliegen; und wobei die stöchiometrischen Mengen an freien Metallen und keramischen Komponenten so gewählt werden, dass weniger als 20 % des gebildeten Verbundwerkstoffs aus Aluminiden besteht, und wobei die werkstofflichen Bedingungen so gewählt werden, dass das Volumen der während der Reaktion gebildeten keramischen Komponenten kleiner ist als das Volumen der in der Reaktion verbrauchten keramischen Komponenten.

2. Verfahren nach Anspruch 1,
**dadurch gekennzeichnet,**
**dass** die stöchiometrischen Mengen des infiltrierenden Metalls und der keramischen Komponenten so gewählt werden, dass das infiltrierende Metall bei der Reaktion im Wesentlichen vollständig reagiert.

3. Verfahren nach einem der vorhergehenden Ansprüche,
**dadurch gekennzeichnet,**
**dass** man den Druckinfiltrationsschritt bei 660 °C oder darunter durchführt.

4. Verfahren nach Anspruch 3,
**dadurch gekennzeichnet,**
**dass** man den Druckinfiltrationsschritt bei 600 °C oder darunter durchführt.

5. Verfahren nach einem der vorhergehenden Ansprüche,
**dadurch gekennzeichnet,**
**dass** man den Druckinfiltrationsschritt mit Hilfe von Pressguss, Druckguss, Gasdruckinfiltration oder Kombinationen davon durchführt.

6. Verfahren nach Anspruch 1,
**dadurch gekennzeichnet,**
**dass** man bei der in situ Druckinfiltration einen Druck von 1 bis 100 MPa und eine mindestens zum Schmelzen der Al- oder Al-Legierungspulverteilchen ausreichenden Reaktionstemperatur anwendet.

7. Verfahren nach Anspruch 6,
**dadurch gekennzeichnet,**
**dass** das Al- oder Al-Legierungspulver eine Teilchengröße aufweist, bei der unter den angewendeten Druck- und Temperaturbedingungen, der Vorkörperherstellung keine Reaktion mit den anderen Komponenten des Pulvergemisches erfolgt.

8. Verfahren nach Anspruch 7,
**dadurch gekennzeichnet,**
**dass** man ein Al- oder Al-Legierungspulver aus überwiegend kugeligen Teilchen im Größenbereich zwischen 5 und 500 μm verwendet.

9. Verfahren nach Anspruch 6,
**dadurch gekennzeichnet,**
**dass** man den Druck durch mechanisches Pressen erzeugt.

10. Verfahren nach einem der Ansprüche 6 bis 9,
**dadurch gekennzeichnet,**
**dass** man die Reaktionstemperatur für einen Zeitraum von 1 Sekunde bis 15 Minuten anwendet.

11. Verfahren nach einem der vorhergehenden Ansprüche,
**dadurch gekennzeichnet,**
**dass** eine Wärmenachbehandlung erfolgt, um weitere Interdiffusion, Legierungsbildung und/oder eine oder mehrere Reaktionen und/oder eine mikrostrukturelle Modifizierung zu erlauben.

12. Verfahren nach einem der vorhergehenden Ansprüche,
**dadurch gekennzeichnet,**
**dass** der Vorkörper mindestens 5 Vol.-% keramische und mindestens 5 Vol.-% freie Metalle umfasst.

13. Verfahren nach einem der vorhergehenden Ansprüche,
**dadurch gekennzeichnet,**
**dass** die keramischen Komponenten des Vorkörpers ausgewählt werden aus der Gruppe, bestehend aus Oxiden, Nitriden, Carbiden, Oxycarbiden, Carbonaten, Oxynitriden, Nitraten, Hydriden, Hydraten, Chloriden, Fluoriden, Jodiden, Boriden, Sulfiden und Sulfaten eines oder mehrerer Metalle, ausgewählt aus der Gruppe, bestehend aus Al, Mg, Cr, Co, Ce, Cu, Hf, Fe, La, Mn, Mo, Ni, Nb, Pd, Pt, Si, Ag, Ta, Ti, V, W, Y und Zr; oder Gemischen, Verbindungen oder festen Lösungen davon.

14. Verfahren nach einem der vorhergehenden Ansprüche,
**dadurch gekennzeichnet,**
**dass** die freien Metalle des Vorkörpers ausgewählt werden aus der Gruppe, bestehend aus Al, Mg, Cr, Co, Ce, Cu, Au, Hf, Fe, La, Mn, Mo, Ni, Nb, Pd, Pt, Si, Ag, Ta, Ti, V, W, Y und Zr oder Gemischen oder Legierungen davon.

15. Verfahren nach Anspruch 9,
**dadurch gekennzeichnet,**
**dass** die freien Metalle des Vorkörpers ausgewählt werden aus der Gruppe, bestehend aus Nickellegierungen,

Chromlegierungen, Kobaltlegierungen und Titanlegierungen.

**16.** Verfahren nach einem der vorhergehenden Ansprüche,
**dadurch gekennzeichnet,**
**dass** man den porösen Vorkörper durch Pressen und/oder Formen von Pulver, bestehend aus den keramischen Komponenten und freien Metallen, unter Verwendung einer oder mehrerer Verfahren umfassend uniaxiales Pressen, isostatisches Pressen, Extrusion, maschinelles Bearbeiten, Spritzgießen, Schlickergießen, Bandgießen, oder Kombinationen davon herstellt.

**17.** Verfahren nach einem der Ansprüche 1 bis 5 und 11 bis 16,
**dadurch gekennzeichnet,**
**dass** man den porösen Vorkörper vor der Druckinfiltration einer Reaktionsvorbehandlung und/oder einer Wärmevorbehandlung unterzieht, um mindestens ein teilweises Sintern zu erlauben.

**18.** Verfahren nach einem der vorhergehenden Ansprüche,
**dadurch gekennzeichnet,**
**dass** man einen Vorkörper verwendet, der ein oder mehrere Verfestigungsmittel, ausgewählt aus der Gruppe, bestehend aus anorganischen Bindemitteln, Zement, Wasserglas, festen Salzen; oder/und Verstärkungselemente aufweist.

**19.** Verfahren nach Anspruch 13,
**dadurch gekennzeichnet,**
**dass** die Verstärkungselemente in Form eines kontinuierlichen Netzwerks oder als diskontinuierliche Fasern, Plättchen oder Partikel vorliegen.

**20.** Verfahren nach einem der vorhergehenden Ansprüche,
**dadurch gekennzeichnet,**
**dass** das zu infiltrierende Al mindestens ein weiteres Metall, ausgewählt aus der Gruppe, bestehend aus Mg, Si, Ca, Sr, Ba, Li, Na, K, Rb, Cs, Cu, Ag, Zn, Sn, In, Pb und Bi und Gemischen und Legierungen davon, enthält.

**21.** Verfahren nach Anspruch 20,
**dadurch gekennzeichnet,**
**dass** das zu infiltrierende Al soviel Anteil der weiteren Metalle enthält, wie es eine Infiltration bei Temperaturen von 750 °C oder darunter noch zulässt.

## Claims

**1.** Method for the production of a composite material comprising a ceramic and a metallic phase with melting points of at least 1100 °C,
**characterized in that**
a porous preform comprising at least one reactive ceramic component and at least one metal that melts at 1000 °C or above is pressure-infiltrated with Al or an Al alloy able to react with at least a portion of the ceramic components, the infiltrating Al or Al alloy either being

1) supplied to the preform from the outside in at least partially molten form at a temperature of 750 °C or less, or
2) some of the At or Al alloy being introduced in solid form into the preform and the rest then being supplied in molten form at a temperature of 750 °C or less from the outside,

the conditions being selected such that the infiltrating Al or Al alloy and the reactive ceramic components undergo a displacement reaction; and the stoichiometric amounts of free metals and ceramic components being selected such that less than 20 % of the resultant composite material consists of aluminides, and the material-related conditions being selected such that the volume of the ceramic components formed during the reaction is smaller than the volume of the ceramic components consumed in the reaction.

**2.** The method of claim 1,
**characterized in that**
the stoichiometric amounts of infiltrating metal and ceramic components are selected such that essentially all of

the infiltrating metal reacts during the reaction.

**3.** Method according to one of the preceding claims,
**characterized in that**
the pressure infiltration step is carried out at 660 °C or less.

**4.** The method of claim 3,
**characterized in that**
the pressure infiltration step is carried out at 600 °C or less.

**5.** Method according to one of the preceding claims,
**characterized in that**
the pressure infiltration step is carried out by means of squeeze casting, die casting, gas pressure infiltration or combinations thereof.

**6.** The method of claim 1,
**characterized in that**
for in-situ pressure infiltration, a pressure of 1 to 100 MPa and a reaction temperature which is at least sufficient to melt the Al or Al alloy particles are used.

**7.** The method of claim 6,
**characterized in that**
the powdered Al or Al alloy displays a particle size which does not result in any reaction with the other components of the powder mixture at the pressure and temperature conditions used to make the preform.

**8.** The method of claim 7,
**characterized in that**
powdered Al or Al alloy of predominantly spherical particles measuring between 5 and 500 µm is used.

**9.** The method of claim 6,
**characterized in that**
the pressure is generated by mechanical pressing.

**10.** Method according to one of claims 6 to 9,
**characterized in that**
the reaction temperature is applied for a period ranging from 1 second to 15 minutes.

**11.** Method according to one of the preceding claims,
**characterized in that**
heat treatment is effected in order to permit further interdiffusion, alloy formation and/or one or more reactions and/or microstructural modification.

**12.** Method according to one of the preceding claims,
**characterized in that**
the preform comprises at least 5 vol. % ceramic and at least 5 vol. % free metals.

**13.** Method according to one of the preceding claims,
**characterized in that**
the ceramic components of the preform are selected from the group consisting of oxides, nitrides, carbides, oxycarbides, carbonates, oxynitrides, nitrates, hydrides, hydrates, chlorides, fluorides, iodides, borides, sulphides and sulphates of one or more metals selected from the group consisting of Al, Mg, Cr, Co, Ce, Cu, Hf, Fe, La, Mn, Mo, Ni, Nb, Pd, Pt, Si, Ag, Ta, Ti, V, W, Y and Zr or mixtures, compounds or solid solutions thereof.

**14.** Method according to one of the preceding claims,
**characterized in that**
the free metals of the preform are selected from the group consisting of Al, Mg, Cr, Co, Ce, Cu, Au, Hf, Fe, La, Mn, Mo, Ni, Nb, Pd, Pt, Si, Ag, Ta, Ti, V, W, Y and Zr or mixtures or alloys thereof.

**15.** The method of claim 9,
**characterized in that**
the free metals of the preform are selected from the group consisting of nickel alloys, chromium alloys, cobalt alloys and titanium alloys.

**16.** Method according to one of the preceding claims,
**characterized in that**
the porous preform is produced by the pressing and/or shaping of powder consisting of the ceramic components and free metals, using one or more methods comprising uniaxial pressing, isostatic pressing, extrusion, machining, injection moulding, slip casting, strip casting or combinations thereof.

**17.** Method according to one of claims 1 to 5 and 11 to 16,
**characterized in that**
prior to pressure infiltration, the porous preform is subjected to a reaction pre-treatment and/or a heat treatment in order to permit at least partial sintering.

**18.** Method according to one of the preceding claims,
**characterized in that**
a preform is used which has one or more strengthening agents selected from the group consisting of inorganic binders, cement, water glass, solid salts; and/or reinforcing elements.

**19.** The method of claim 13,
**characterized in that**
the reinforcing elements are present in the form of a continuous network or as discontinuous fibres, platelets or particles.

**20.** Method according to one of the preceding claims,
**characterized in that**
the Al to be infiltrated contains at least one additional metal selected from the group consisting of Mg, Si, Ca, Sr, Ba, Li, Na, K, Rb, Cs, Cu, Ag, Zn, Sn, In, Pb and Bi and mixtures and alloys thereof.

**21.** The method of claim 20,
**characterized in that**
the Al to be infiltrated contains as great a proportion of other metals as infiltration at temperatures of 750 °C or below still permits.

## Revendications

**1.** Procédé de fabrication d'un matériau composite, comprenant une phase céramique et une phase métallique, dont les points de fusion s'élèvent au moins à 1100 °C, **caractérisé en ce qu'**on infiltre sous pression au moins un des composants réactifs céramiques et un métal en fusion à une température au moins égale ou supérieure à 1000 °C comprenant un précorps poreux avec de l'aluminium ou un alliage d'aluminium lequel peut réagir avec au moins une partie des composants céramiques, dans lequel l'aluminium ou l'alliage d'aluminium infiltré :

1) est soit alimenté de l'extérieur au précorps, au moins en partie sous forme fondue à une température égale ou inférieure à 750 °C,

2) soit une partie de l'aluminium ou de l'alliage d'aluminium est introduite dans le précorps sous forme solide, et, l'autre partie sous forme fondue à une température inférieure à 750° C est ensuite alimentée au précorps de l'extérieur,

dans lequel les conditions sont choisies pour que l'aluminium ou l'alliage d'aluminium infiltré et les composants céramiques réactifs soient soumis à une réaction de déplacement ; et dans laquelle les quantités stoechiométriques des métaux libres et des composants céramiques sont choisis de telle sorte que moins de 20 % du matériau composite est constitué d'aluminium, et dans laquelle les conditions de formation du matériau sont choisies de telle sorte, que le volume des composants céramiques qui se forment pendant la réaction est inférieur au volume des composants céramiques utilisés pendant la réaction.

**2.** Procédé selon la revendication 1, **caractérisé en ce que**, les quantités stoechiométriques du métal infiltré et des composants céramiques sont choisies de telle sorte que le métal infiltré réagit pour l'essentiel complètement pendant la réaction.

**3.** Procédé selon une des revendications précédentes, **caractérisé en ce que**, l'étape d'infiltration sous pression est effectuée à une température de 660°C ou inférieure.

**4.** Procédé selon la revendication 3, **caractérisé en ce que**, l'étape d'infiltration sous pression est effectuée à une température de 600 °C ou inférieure.

**5.** Procédé selon l'une des revendications précédentes, **caractérisé en ce que**, l'étape d'infiltration sous pression est mise en oeuvre grâce à un moulage matricé, à un moulage sous pression, à une infiltration sous pression de gaz ou une combinaison de ceux-ci.

**6.** Procédé selon la revendication 1, **caractérisé en ce que**, pendant l'infiltration sous pression, on applique une pression de 1 à 100 MPa et une température de réaction au moins suffisante pour la fusion de l'aluminium ou des particules de poudre de l'alliage d'aluminium.

**7.** Procédé selon la revendication 6, **caractérisé en ce que**, la poudre d'aluminium ou d'alliage d'aluminium possède une taille de particules telle qu'aucune réaction ne puisse avoir lieu avec les autres composants du mélange de poudres sous la pression appliquée et les conditions de température de la préparation du précorps.

**8.** Procédé selon la revendication 7, **caractérisé en ce que**, une poudre d'aluminium ou d'alliage d'aluminium est utilisée principalement sous la forme de petites particules sphériques mesurant entre 5 et 500 μm.

**9.** Procédé selon la revendication 6, **caractérisé en ce que**, la pression est générée par une presse mécanique.

**10.** Procédé selon les revendications 5 à 9, **caractérisé en ce qu'**on applique la température nécessaire à la réaction pendant une période de temps de 1 seconde à 15 minutes.

**11.** Procédé selon l'une des revendications précédentes, **caractérisé en ce qu'**on effectue ensuite un traitement thermique afin de permettre d'autres interdiffusion, formation d'alliage et/ou plusieurs réactions et/ou modification microstructurelle.

**12.** Procédé selon une des précédentes revendications, **caractérisé en ce que**, le précorps comprend au moins 5 % en volume de céramique et au moins 5 % en volume de métal libre.

**13.** Procédé selon l'une des revendications précédentes, **caractérisé en ce que**, les composants céramiques du précorps sont choisis dans le groupe consistant en des oxydes, nitrures, carbures, oxycarbures, carbonates, oxynitrures, nitrates, hydrures, hydrates, chlorures, fluorures, iodures, borures, sulfures ou sulfates d'un ou plusieurs métaux, choisis dans le groupe consistant en Al, Mg, Cr, Co, Ce, Cu, Hf, Fe, La, Mn, Mo, Ni, Nb, Pd, Pt, Si, Ag, Ta, Ti, V, W, Y et Zr ; ou des mélanges, des composés ou des solutions solides de ceux-ci.

**14.** Procédé selon Tune des revendications précédentes, **caractérisé en ce que**, les métaux libres du précorps sont choisis dans le groupe consistant en Al, Mg, Cr, Co, Ce, Cu, Au, Hf, Fe, La, Mn, Mo, Ni, Nb, Pd, Pt, Si, Ag, Ta, Ti, V, W, Y et Zr ou des mélanges ou des alliages de ceux-ci.

**15.** Procédé selon la revendication 9, **caractérisé en ce que**, les métaux libres du précorps sont choisis dans le groupe consistant en des alliages de nickel, des alliages de chrome, des alliages de cobalt et des alliages de titane.

**16.** Procédé selon une des revendications précédentes, **caractérisé en ce qu'**on prépare le précorps poreux à partir de presses et/ou de moules de poudre, consistant en des composants céramiques et des métaux libres, sous l'application d'un ou plusieurs procédés comprenant des presses uniaxiales, des presses isostatiques, l'extrusion, le traitement mécanique, le moulage par injection, la coulée en barbotine, la coulée continue ou des combinaisons de ceux-ci.

**17.** Procédé selon une quelconque des revendications 1 à 5 et 11 à 16, **caractérisé en ce que**, l'on soumet le précorps poreux à un traitement préalable à la réaction et/ou un traitement thermique préalable avant l'infiltration sous

pression un traitement réactif et/ou un traitement thermique initial, pour minimiser partiellement les crasses.

**18.** Procédé selon une des revendications précédentes, **caractérisé en ce qu'**on utilise un précorps dans lequel apparaît un ou plusieurs agents durcisseurs choisis dans le groupe consistant en des liants inorganiques, des ciments, des silicates alcalins, des sels à l'état solide ou/et des éléments renforçant la structure.

**19.** Procédé selon la revendication 13, **caractérisé en ce que**, les éléments de renforcement sont présents sous forme d'un réseau continu ou de fibres discontinues, de lamelles ou de particules.

**20.** Procédé selon une des revendications précédentes, **caractérisé en ce que** l'aluminium à infiltrer contient au moins un autre métal, choisi dans le groupe consistant en Mg, Si, Ca, Sr, Ba, Li, Na, K, Rb, Cs, Cu, Ag, Zn, Sn, In, Pb et Bi ou des mélanges et des alliages de ceux-ci.

**21.** Procédé selon la revendication 20 **caractérisé en ce que** l'aluminium à infiltrer renferme autant de parties des autres métaux qu'il permet encore une infiltration à des températures de 750 °C ou inférieures.

Bild 1: XRD-Muster der Probe von Beispiel 1a

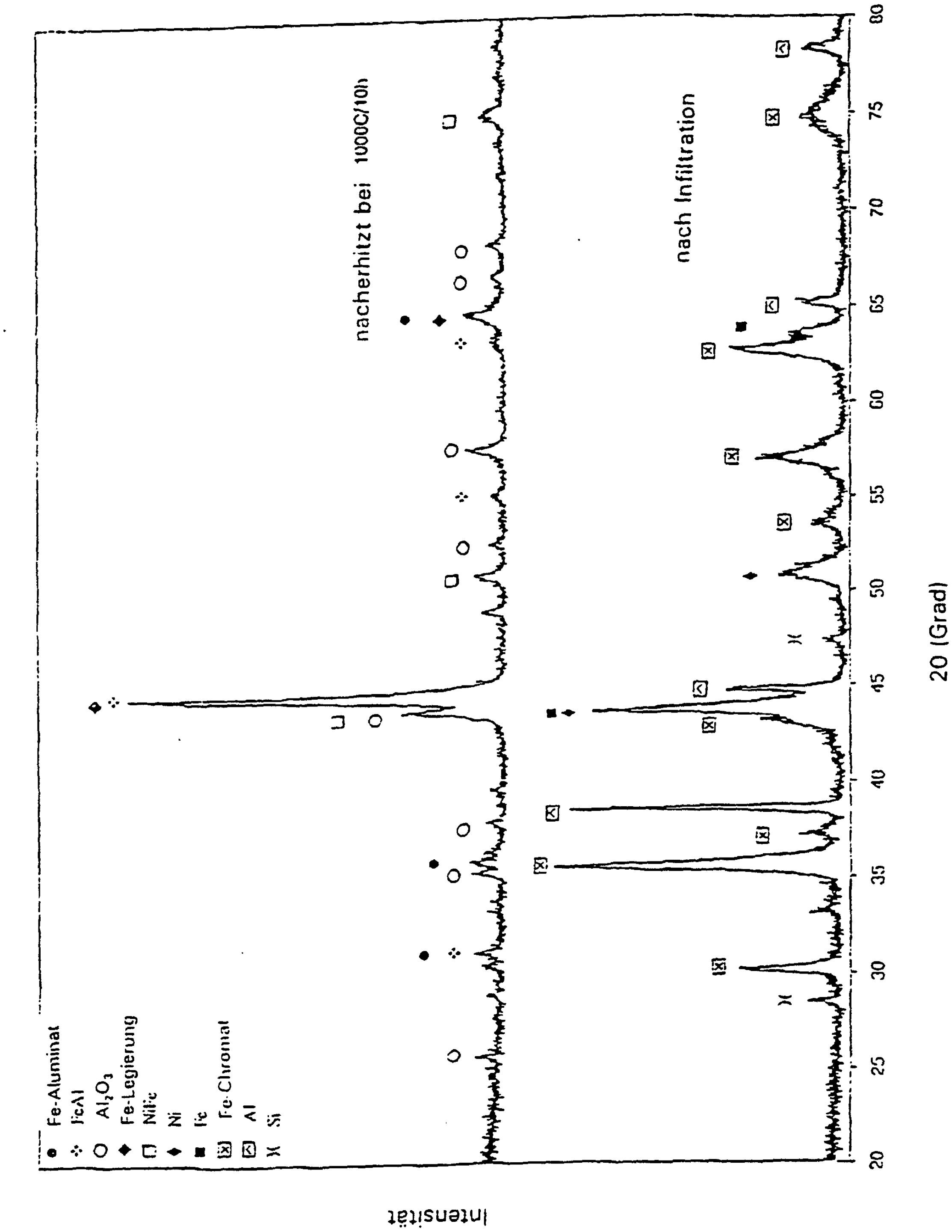

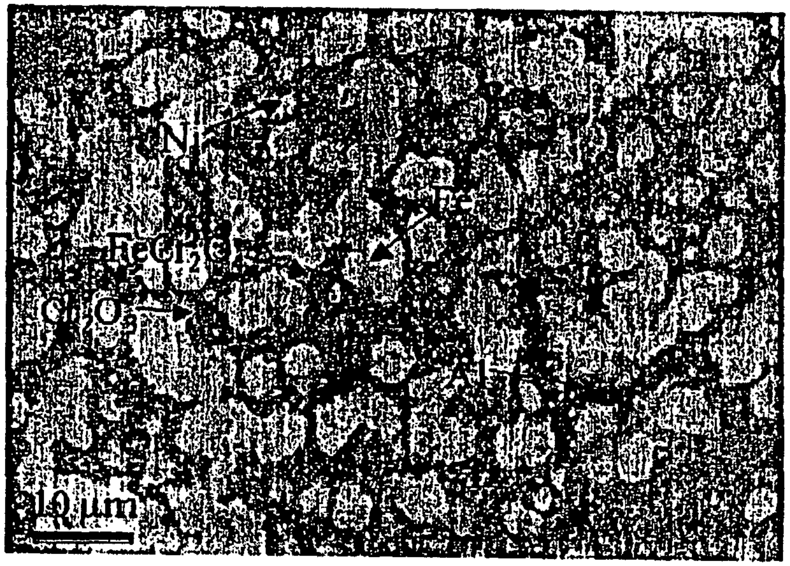


Bild 2a: BSE-Aufnahme des Vorkörpers von Beipsiel 1a nach der Infiltration. Helle Partikel sind Fe mit Chromat an den Kanten. Hellgraue Partikel sind Chromoxid, obwohl in XRD nicht sichtbar; die dunkle kontinuierliche Phase ist Al.

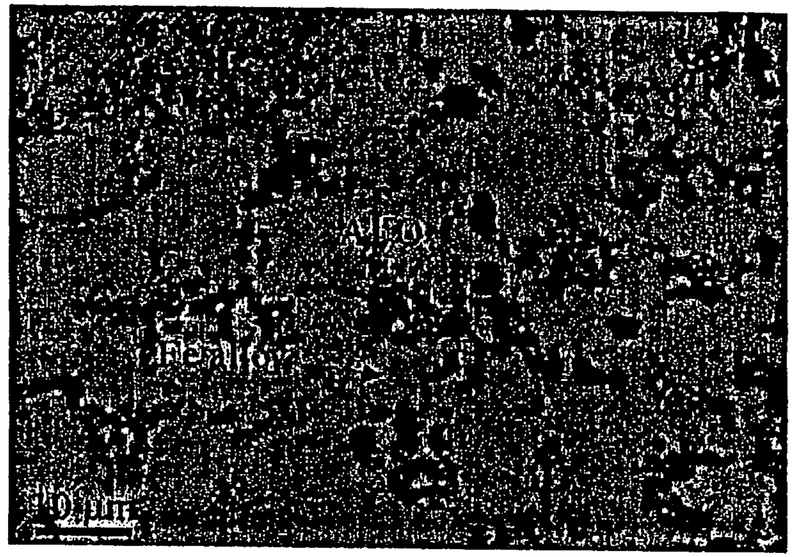

Bild 2b: BSE-Bild gemäß Beispiel 1a nach der Nacherhitzung. Helle große Partikel sind Fe, legiert mit Cr, Ni und möglicherweise Al.

Bild 3: XRD-Muster der Probe von Beispiel 1d

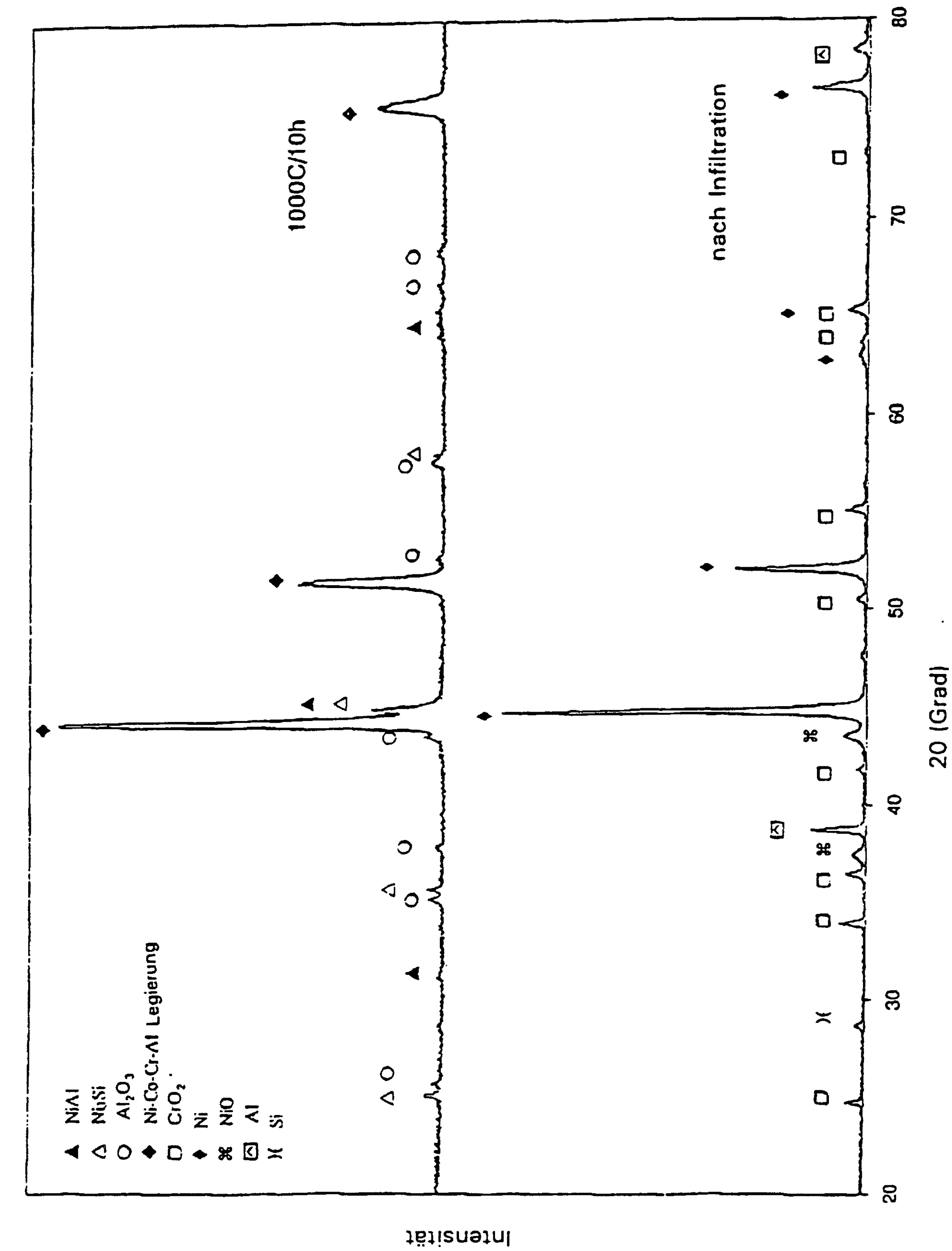

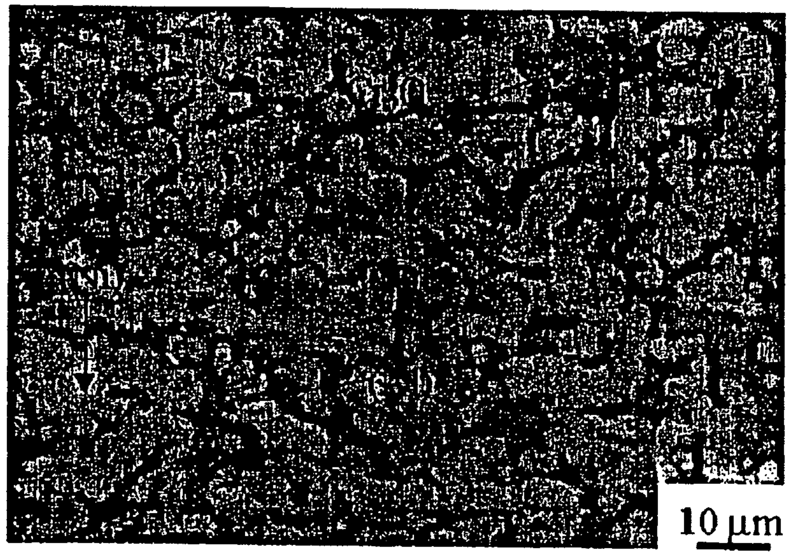


Bild 4a: Mikrostrukturen (BSE) des infiltrierten Vorkörpers von Beispiel 1d.

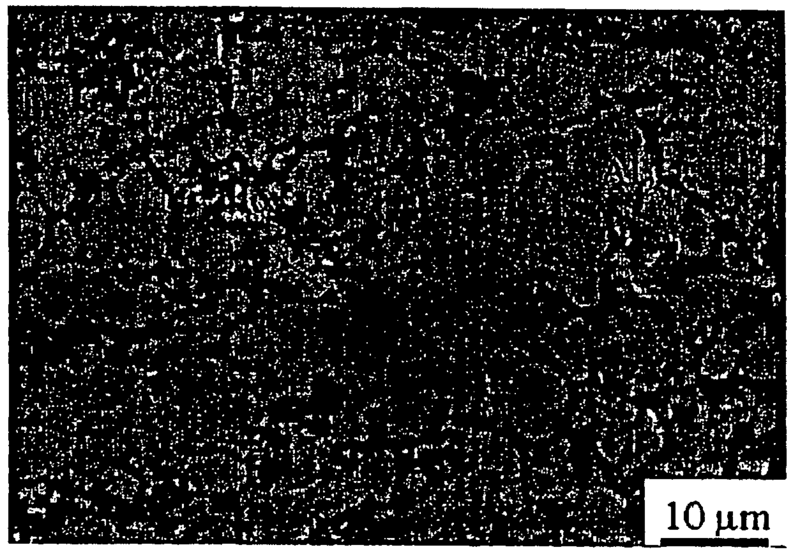


Bild 4b: Mikrostruktur des nacherhitzten Vorkörpers von Beispiel 1d.